Europäisches Patentamt

European Patent Office

Office européen des brevets

(11) Numéro de publication: **0 322 316**
A2

# (12) DEMANDE DE BREVET EUROPEEN

(21) Numéro de dépôt: **88403277.2**

(22) Date de dépôt: **21.12.88**

(51) Int. Cl.⁴: **B 29 C 67/14**
**B 32 B 31/20**

(30) Priorité: **22.12.87 FR 8717927**

(43) Date de publication de la demande:
**28.06.89 Bulletin 89/26**

(84) Etats contractants désignés:
**AT BE CH DE ES FR GB GR IT LI LU NL SE**

(71) Demandeur: **ARIS S.A.**
**3 chemin de la Poterie B.P. 19**
**F-72340 La Charte sur le Loir (FR)**

(72) Inventeur: **Panhelleux, Gérard**
**66, rue de la Mariette**
**F-72000 Le Mans (FR)**

(74) Mandataire: **Poidatz, Emmanuel et al**
**Cabinet M. SABATIER 83, Avenue Foch**
**F-75116 Paris (FR)**

(54) **Procédé et installation de fabrication d'un panneau en matériau composite.**

(57) Procédé et installation de fabrication d'un panneau en matériau composite, selon lesquels des plaques et/ou feuilles de matière thermoplastique et de revêtement, découpées aux formats voulus dans un poste (24), sont empilées les unes sur les autres dans un poste (26) de préparation du panneau, puis transférées dans un four (28) à température pour être chauffées et collées les unes aux autres sous une pression de contact modérée, après quoi le panneau (10) est amené à un poste (20) de thermocompression suivi d'un poste d'usinage (34).

L'invention concerne la fabrication et la mise en forme des panneaux de matériau composite.

FIG.2

EP 0 322 316 A2

**Description**

## PROCEDE ET INSTALLATION DE FABRICATION D'UN PANNEAU EN MATERIAU COMPOSITE

L'invention concerne essentiellement un procédé et une installation de fabrication d'un panneau en matériau composite, comprenant une âme en matière thermoplastique et au moins un revêtement de surface ou peau en une matière thermoplastique différente.

Elle concerne également les panneaux en matériau composite obtenus par exécution de ce procédé ou mise en oeuvre de cette installation.

On connaît plusieurs procédés de fabrication de panneaux en matière composite, en particulier les procédés présentés ci-après:

La demande de brevet GB.A.1 238 178 décrit un procédé de fabrication d'un panneau composite à base de plaques de PCV mais sans revêtement externe. Selon ce procédé, le panneau par soudure au "flash" électrique (15 000 ampères) sous forte pression (30 kg/cm2). De plus, ce procédé qui nécessite un refroidissement insitu pour assurer le démoulage du panneau n'est pas adapté à la réalisation de panneaux selon l'invention.

La demande de brevet FR.A.2 447 274 décrit un procédé de collage d'une matière thermoplastique avec une matière thermodurcissable par l'intermédiaire d'une couche d'adhésif, sous pression élevée et avec démoulage à froid.

La demande de brevet FR.A.2 361 213 décrit un procédé de réalisation de cartes magnétiques en PVC type "carte bancaire". Ce procédé qui prévoit la mise sous vide de l'enceinte contenant la carte n'est pas adapté à la réalisation de panneaux de grande surface (pouvant atteindre plusieurs m2). Ici encore le procédé, basé sur une alternance de chauffage/ refroidissement des plaques par jet d'air, nécessite la mise en oeuvre d'un refroidissement puissant et immédiat de la carte après l'opération de collage pour assurer son démoulage.

La demande de brevet EP.A.97 279 décrit un procédé de réalisation d'un panneau composite par densification à haute préssion (20 à 50 kg/cm2) à partir de matériaux non structurels tels les composants d'un thermodurcissable, ou un caoutchouc avant vulcanisation. La mise en oeuvre de ce procédé entraîne une réduction de l'épaisseur du panneau de l'ordre de 20%.

La demande de brevet DE.A.2 927 653 décrit un procédé de revêtement de plaques de blindage en acier ou en matériau analogue à haute résistance. Ce procédé n'est pas non plus adapté à la fabrication d'un panneau composite à base de feuilles en matière thermoplastique selon l'invention.

Les brevets U.S.A. 3 042 574 et U.S.A. 4 290 838 décrivent des procédés de fabrication de stratifiés de petite dimension à base de composants thermodurcissables dans une enceinte sous vide avec chauffage et refroidissement in-situ.

Aucun des procédés présentés ci-dessus ne permet d'obtenir des panneaux de grande taille, notamment des panneaux autoporteurs, à base d'une âme en matière thermoplastique recouverte d'un revêtement ou peau de matière thermoplastique différente.

D'une façon générale, la fabrication en série de panneaux en matériau composite, qui sont constitués par la superposition de couches de matières thermoplastiques différentes, pose un certain nombre de problèmes, notamment lorsque ces panneaux doivent subir une mise en forme par thermoformage ou thermocompression. Cette dernière opération suppose en effet que les couches de matières constitutives du produit soient chauffées et positionnées de façon correcte immédiatement avant leur passage à la presse. Cependant, les moyens connus de chauffage, à rayons infrarouges ou à air chaud, ne donnent pas satisfaction.

On a constaté en particulier que les fours de chauffage par rayonnement infrarouge ne permettaient pas un chauffage suffisant en profondeur, de sorte que les couches internes du panneau composite ne sont pas chauffées. On constate également, dans les fours à rayonnement infrarouge ou à air chaud, que les couches de revêtement de surface du panneau composite se rétractent et que la ou les couches de matière formant l'âme du panneau glissent par rapport à ces couches de revêtement. Il arrive également qu'un bord ou un coin d'une couche de matière de revêtement se soulève et se plie ou s'enroule sur lui-même. Il se produit de plus une oxydation superficielle de la couche de revêtement.

Il est par ailleurs impossible dans les fours traditionnels de chauffer séparément ou individuellement les différentes couches de matière avant de les empiler et de soumettre l'ensemble à une thermocompression. Le temps nécessaire à la formation de l'empilage correspondant au panneau de matériau composite est trop long, et se traduit par un refroidissement des couches de matière.

L'invention a précisément pour objet d'éviter ces inconvénients de la technique antérieure.

Elle a encore pour objet un procédé et une installation de fabrication de panneaux en matériau composite, qui permettent la fabrication en série de panneaux d'excellente qualité.

Elle a également pour objet un procédé et une installation de ce type qui sont particulièrement adaptés au formage de panneaux de matériau composite à base de thermoplastique par thermocompression.

L'invention propose à cet effet, un procédé de fabrication d'un panneau en matériau composite, comprenant une âme en matière thermoplastique et au moins un revêtement (ou peau) en matière thermoplastique différente, le procédé consistant à découper aux formes voulues des plaques ou feuilles de l'âme et du revêtement, puis à les chauffer et à les assembler, caractérisé en ce que, avant chauffage, le panneau de matériau composite est constitué par empilage les unes sur les autres des différentes plaques ou feuilles découpées des matières thermoplastiques formant l'âme et le revêtement (ou la peau) après quoi, le panneau est transféré dans un four de chauffage dans lequel lesdites plaques ou feuilles empilées sont maintenues en contact par pression modérée entre deux plaques chauffantes portées à une température régulée telle qu'il se produit une fixation ou un collage, par fusion superficielle, entre les différentes plaques ou feuilles empilées du panneau, et enfin de façon optionnelle en ce que le panneau à sa sortie du four sous la forme d'un élément monobloc est soumis à une thermocompression pour réaliser notamment une conformation en surface.

Le procédé selon l'invention présente de nombreux avantages: le panneau de matériau composite peut être constitué avec soin, avant chauffage, par empilage des différentes couches de matière. Comme le chauffage a lieu par serrage sous pression modérée de cet empilage entre deux plaques chauffantes, les risques de déplacement des différentes couches les unes par rapport aux autres et de rétraction des couches superficielles de matière de revêtement, sont sensiblement exclus. L'oxydation superficielle de la couche de revêtement est évitée.

Enfin, à la sortie du four, le panneau forme un ensemble monobloc qui est aisément manipulable.

Selon une autre caractéristique de l'invention, les plaques chauffantes sont munies de résistances électriques de chauffage à régulation en température. L'emploi de ces résistances électriques évite les inconvénients propres au chauffage par rayonnement infrarouge ou par air chaud, et permet de plus un chauffage à une température préetablie très facilement réglable.

Selon encore une autre caractéristique de ce procédé, les feuilles ou plaques empilées destinées à former le panneau de matériau composite sont transférées au poste de chauffage par au moins une bande transporteuse de matière à propriétés antiadhérentes. Avantageusement, les feuilles ou plaques empilées amenées au poste de chauffage restent maintenues entre ces bandes transporteuses pendant le chauffage.

On évite ainsi tout risque de déplacement relatif des différentes plaques ou feuilles les unes par rapport aux autres pendant le transfert jusqu'au poste de chauffage.

L'invention propose également une installation de fabrication d'un panneau en matériau composite, comprenant au moins une âme en matière thermoplastique et un revêtement (ou peau) en matière thermoplastique différente de celle de l'âme, caractérisée en ce qu'elle comporte un poste de chauffage comprenant deux plaques chauffantes sensiblement parallèles, chaque plaque chauffante comprenant une plaque métallique, par exemple d'aluminium, sur une face de laquelle sont disposées des résistances électriques de chauffage convenablement associées à une régulation de température, des moyens de déplacement relatif et de serrage contrôlé à pression modérée de ces deux plaques l'une sur l'autre, et des moyens de transfert pour amener entre les plaques chauffantes un empilage de plaques ou feuilles de matière thermoplastique formant l'âme et le revêtement (ou la peau) du panneau composite.

Les résistances électriques peuvent être agencées sur la plaque chauffante en modules à régulation indépendante.

Cette caractéristique permet notamment d'adapter les plaques chauffantes au type et à la taille des panneaux de matériau de composite en cours de fabrication.

Selon une autre caractéristique de l'invention, les moyens de transfert comprennent au moins une bande transporteuse, par exemple en tissu enduit d'une matière à propriétés antiadhérentes, sur laquelle sont maintenues les plaques ou les feuilles empilées pendant le chauffage.

Ce poste de chauffage peut être suivi d'un poste de thermocompression, comprenant une presse dont les plateaux parallèles sont équipés de matrices, de préférence refroidies, ou de plaques de formage avec découpage optionnel et des moyens pour transférer le panneau composite entre les plateaux de la presse et pour l'en sortir après formage.

Comme la durée de séjour du panneau au poste de thermocompression est en général inférieure à la durée de son séjour au poste de chauffage, le poste de thermocompression est avantageusement disposé entre deux postes de chauffage, et est alimenté en alternance par ces deux postes.

L'installation comprend encore, en amont du ou de chaque poste de chauffage, un poste d'approvisionnement en plaques et/ou feuilles de matière thermoplastique formant l'âme et le revêtement, un poste de découpe de ces plaques et/ou feuilles aux formats voulus, et un poste de préparation du panneau par empilage les unes sur les autres des diverses plaques et/ou feuilles découpées destinées à former le panneau composite.

En aval du poste de thermocompression, l'installation peut comprendre un poste d'usinage, et éventuellement un poste de montage d'accessoires, et des postes de rangement et/ou d'emballage des panneaux.

L'invention concerne également les panneaux de matériau composite à base de matériaux thermoplastiques, qui sont obtenus par exécution du procédé qui vient d'être décrit ou mise en oeuvre de cette installation. De tels panneaux autoporteurs trouvent des applications dans des domaines les plus divers, en raison de leur légéreté, de leurs qualité d'isolation thermique et acoustique, de leur résistance mécanique, de leur qualité d'aspect, etc...

L'invention présente en outre l'avantage de permettre l'obtention d'un produit fini, qui peut ensuite être utilisé tel quel.

D'autres caractéristiques, détails et avantages de l'invention apparaîtront à la lecture de la description qui suit, faite à titre d'exemple en référence aux dessins annexés, dans lesquels:

La figure 1 est une vue schématique en coupe d'un panneau de matériau composite selon l'invention;

La figure 2 est une vue en plan d'une installation de fabrication selon l'invention;

La figure 3 est une vue en élévation de cette installation;

La figure 4 est une vue schématique d'un mode de réalisation du poste de chauffage de l'installation.

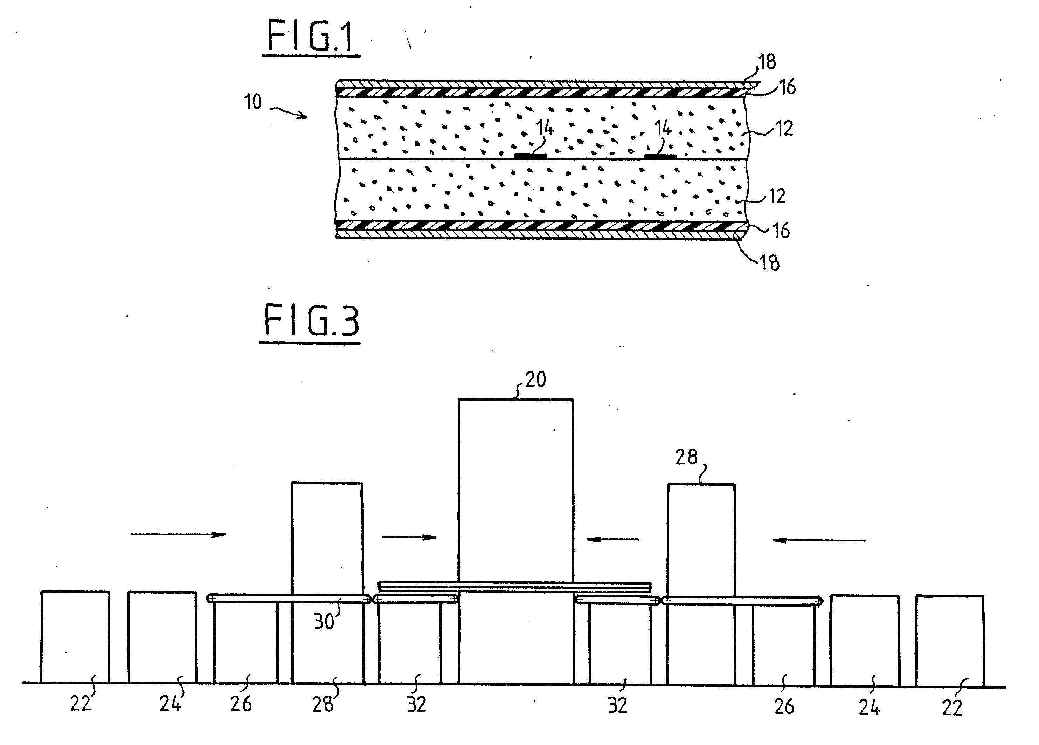

On se réfère d'abord à la figure 1, qui représente un exemple de réalisation, non limitatif, d'un panneau composite autoporteur selon l'invention.

Ce panneau désigné généralement par la référence 10 comprend une âme formée de deux épaisseurs 12 de matière thermoplastique, notamment sous forme alvéolaire, placées l'une sur l'autre et entre lesquelles peuvent être disposés des inserts métalliques 14 de renforcement, chaque épaisseur de matière thermoplastique alvéolaire 12 étant recouverte d'un revêtement 16 (ou peau) par exemple une feuille ou plaque 16 de matière plastique plus compacte, par exemple de matière plastique thermoformable, de thermoplastique renforcé estampable, ou encore une épaisseur de feutre de fibres synthétiques ou une nappe de fibres non tissées, chaque couche de revêtement 16 étant elle même revêtue (dans l'exemple ici décrit) d'une couche de finition 18 qui peut être un tissu enduit ou non, un film de matière plastique peint ou non, etc...

Un tel panneau composite peut être formé à partir des matières thermoplastiques les plus diverses, l'âme pouvant être composée de polyéthylène, de polyuréthane souple ou semi-rigide, de chlorure de polyvinyle, de caoutchouc mousse de synthèse; ces matériaux thermoplastiques étant éventuellement sous une forme alvéolaire ou de nid d'abeille.

Les inserts de renforcement peuvent être métalliques ou en matière plastique. Ils peuvent être noyés dans l'âme ou implantés affleurant en surface.

On comprend que, si l'on essaye de chauffer dans un four traditionnel, à rayonnement infrarouge ou à air chaud, un empilage de matières tel que celui du panneau de la figure 1, les différentes couches superposées vont se déplacer les unes par rapport aux autres, les couches superficielles 18 risquent de se rétracter, ou de se soulever, etc.. Si l'on essaye de chauffer séparément ces diverses couches, les opérations de montage du panneau composite sont trop longues et trop compliquées, et le refroidissement des couches ne permet pas un formage par thermocompression.

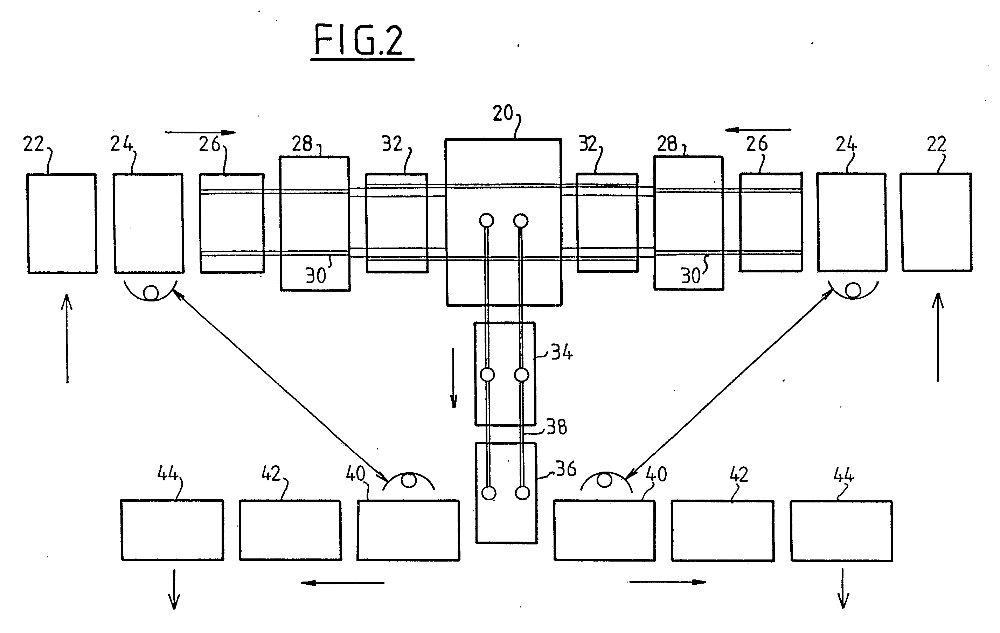

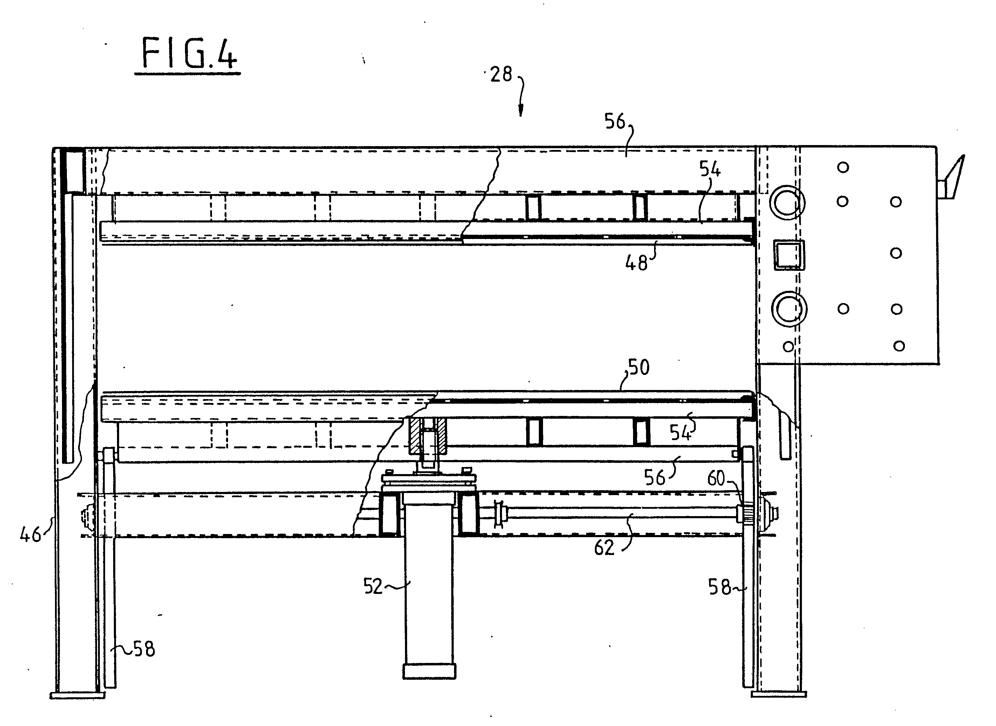

Le procédé et l'installation selon l'invention permettent d'éviter ces inconvénients. L'installation, dont un mode de réalisation est représenté schématiquement dans les figures 2 et 3, comprend un poste central 20 de thermocompression, qui est essentiellement une presse dont les plateaux parallèles sont équipés de matrices, de préférence refroidies, ou de plaques de formage définissant la forme finale du produit à obtenir. En amont du poste de thermocompression, et de chaque côté de celui-ci, on trouve, dans l'ordre de succession des opérations, un poste d'approvisionnement 22, alimenté en matières premières par tout moyen approprié, un poste 24 de découpe des formats, une table 26 de préparation du panneau composite, un poste de chauffage 28 du panneau, de type four-tunnel alimenté par des bandes transporteuses 30, et un poste de transfert 32, alimentant le poste 20 de thermocompression par exemple au moyen d'un convoyeur à chaîne.

En aval du poste de thermocompression, on trouve un poste d'usinage 34 et une table 36 de réception de produit, alimentée depuis le poste de thermocompression 20 par un portique robotisé 38. De chaque côté de la table 36 peuvent se trouver, selon le cas, des postes 40 de suppression des chutes, 42 de rangement sur palettes et 44 d'emballage.

Un mode de réalisation du poste de chauffage 28 est représenté plus en détail en figure 4. Le poste de chauffage 28 comprend un bâti fixe 46 supportant une plaque chauffante horizontale 48, qui est fixe en position, et sous laquelle se trouve une autre plaque chauffante 50 horizontale, déplaçable en direction verticale vers et à l'opposé de la plaque supérieure 48 au moyen d'un vérin pneumatique 52. Les plaques 48 et 50 sont de forme rectangulaire et ont sensiblement la même dimension (leur surface utile peut atteindre plusieurs m2). Chaque plaque chauffante 48, 50 est formée d'une plaque d'aluminium, sur une face de laquelle sont disposées des résistances électriques de chauffage agencées en modules indépen dants juxtaposés convenablement associés à des moyens de régulation thermique. Les plaques 48 et 50 sont recouvertes d'une plaque 54 de matière thermiquement isolante. Chaque ensemble plaque d'aluminium -résistance de chauffage - isolation thermique est relié par des pattes de fixation à une structure de support 56 formée de poutrelles métalliques entrecroisées.

La structure de support 56 de la plaque chauffante supérieure 48 est montée fixement sur le bâti 46 du poste de chauffage. La structure de support 56 de la plaque inférieure chauffante 50 est guidée, dans son déplacement vertical, par quatre crémaillères verticales 58 fixées aux quatre coins de la structure de support 56 et qui engrênent avec des pignons 60 montés sur des arbres horizontaux 62 reliés entre eux par des trains d'engrenage, de telle sorte que les déplacements des crémaillères verticales 58 soient synchronisées et que la plaque chauffante inférieure 50 soit déplacée parallèlement à elle même.

Selon les cas, les panneaux de matériau composite chauffés peuvent être placés directement entre les plaques chauffantes 48 et 50 qui sont alors revêtues, sur leurs faces en regard, d'une couche de matière antiadhérente, par exemple au polytétrafluoréthylène (P.T.F.E.) commercialisé sous la marque TEFLON.

En variante, la bande transporteuse 30 qui alimente le poste de chauffage 28 peut être en tissu (par exemple de fibre de verre) enduit de matière à propriétés antiadhérentes (P.T.F.E.)et passe à l'intérieur du four. Dans ce cas, le panneau de matériau composite à chauffer reste sur la bande transporteuse 30 pendant son passage dans le four-tunnel.

On peut également prévoir deux telles bandes transporteuses superposées, entre lesquelles est maintenu le panneau de matériau composite, depuis le poste de préparation du panneau jusqu'à la sortie du four.

L'installation selon l'invention fonctionne de la façon suivante:

Des panneaux de matériau composite sont préparés simultanément, de part et d'autre du poste de thermocompression 20. Les plaques, feuilles et films de matières premières amenés au poste 22 sont découpés aux formats voulus, au poste 24 et sont empilés les uns sur les autres, dans l'ordre voulu, au poste de préparation 26, les inserts métalliques ou plastiques 14 étant placés, si nécessaire entre deux épaisseurs de matière plastique alvéolaire destinées à former l'âme du panneau de matériau composite. Il est toutefois possible sans sortir du cadre de l'invention de déposer ces inserts en surface du panneau composite.

Cet empilage de plaques, feuilles et/ou films découpés est transféré, par les moyens indiqués précédemment, au poste de chauffage 28, où il est serré entre les plaques de chauffage 48 et 50.

L'agencement en modules indépendants des résistances électriques dont sont équipés ces plaques de chauffage permet une thermorégulation des plaques 48 à 50 en fonction du produit à obtenir. De plus dans le cas d'un four-tunnel, il est possible de réguler les modules d'entrée et de sortie à une température légérement supérieure à celle des modules centraux pour tenir compte des pertes techniques aux extrémités du four. La durée et la température de chauffage sont fonction de l'épaisseur du panneau composite et du type de matières le constituant. Les plaques chauffantes 48 et 50 sont serrées sur le panneau composite avec une pression relativement faible (notamment de l'ordre 100g/cm2), permettant de maintenir un bon contact, d'une part entre les éléments constituants du panneau, d'autre part avec les plaques de chauffage.

Le chauffage réalisé de cette façon permet, par une fusion pateuse superficielle des constituants, de les coller ensemble, de telle sorte que le produit sortant du poste de chauffage est un produit monobloc qui est aisément manipulable et dont les différents constituants ne peuvent se déplacer les uns par rapport aux autres. Si l'utilisation de certaines matières le nécessite, un film de matière thermofusible peut être placé entre deux plaques ou feuilles superposées, pour faciliter leur collage.

Le chauffage du panneau, réalisé selon l'invention, présente en outre l'avantage qu'il n'y a pas de retrait de l'un ou l'autre des éléments constitutifs du panneau. Celui-ci garde donc toutes ses possibilités d'allongement, ce qui permet des emboutis importants lors de la thermocompression. De plus le procédé selon l'invention par collage à température régulée préétablie sous une faible pression de contact permet un démoulage à chaud sans perte de temps. L'opération de thermocompression peur ensuite être réalisée sans risque de glissement des couches du revêtement (ou de la peau).

La course de la plaque chauffante inférieure est bien entendu déterminée préalablement en fonction du produit à obtenir. Des butées peuvent être en outre prévues pour éviter tout écrasement du panneau.

De façon préférentielle, le panneau de matériau composite sortant du poste de chauffage 28 est ensuite amené directement au poste de thermocompression. Les plateaux de la presse constituant ce poste sont équipés de plaques ou de matrices de formage, permettant de donner au panneau de matériau composite la géométrie finale du produit à réaliser, en particulier dans le cas de panneaux plans une simple conformation en surface. La thermocompression peut également comprendre une découpe périphérique du panneau composite, la chute restant attachée au produit final en quelques points.

A la sortie de la presse, le produit est transféré, par le portique 38, à un poste d'usinage, par exemple de perçage et/ou de fixation d'accessoires, puis il est amené sur une table 36 d'où il est repris pour être transféré à un poste 40 de suppression des chutes. Le produit final peut ensuite être rangé sur une palette ou sur tout support approprié, au poste 42, puis gagne le poste d'emballage 44.

Pour fixer les idées, on indiquera à titre d'exemple, que la durée de séjour d'un panneau composite dans le poste de chauffage 28 peut être de l'ordre de 4mn, la température des plaques chauffantes 48, 50 étant comprise entre 180 et 300°C en fonction des matières. Comme la durée de la thermocompression au poste 20 est beaucoup plus courte, ce poste peut être alimenté en alternance par deux ensembles symétriques de préparation et de chauffage de panneaux composites. En fonction de l'usinage suivant la thermocompression, le poste 20 peut alimenter un ou deux postes 34 d'usinage.

Dans l'exemple représenté, les postes 40 de suppression des chutes, 42 de rangement sur palette et 44 d'emballage, forment deux ensembles symétriques par rapport à la table 36 suivant le poste d'usinage.

De façon générale, l'invention permet d'obtenir un produit industriel fini de façon très rapide et avec un nombre d'opérations de fabrication très réduit. Le produit obtenu présente en outre des qualités de légèreté, d'isolation thermique et acoustique, de résistance mécanique et de finition que ne présentent pas les produits traditionnels concurrents.

**Revendications**

1/ Procédé de fabrication d'un panneau en matériau composite, comprenant une âme en matière thermoplastique et au moins un revêtement (ou peau) en matière thermoplastique différente, le procédé consistant à découper aux formes voulues des plaques ou feuilles de l'âme et du revêtement, puis à les chauffer et à les assembler, caractérisé en ce que, avant chauffage, le panneau de matériau composite est constitué par empilage les unes sur les autres des différentes plaques ou feuilles (12, 16, 18) découpées de matières thermoplastiques formant l'âme et le revêtement (ou la peau), après quoi le panneau est transféré dans un four de chauffage (28) dans lequel lesdites plaques ou feuilles empilées sont maintenues en contact par pression modérée entre deux plaques chauffantes (48, 50) portées à une température régulée telle qu'il se produit une fixation ou un collage, par fusion superficielle, entre les différentes plaques ou feuilles empilées du panneau, et enfin de façon optionnelle en ce que le panneau à sa sortie du four sous la forme d'un élément monobloc est soumis à une thermocompression- pour réaliser notamment une conformation en surface.

2/Procédé selon la revendication 1, caractérisé en ce que les plaques chauffantes (48, 50) sont munies de résistances électriques de chauffage à régulation en température.

3/Procédé selon la revendication 1 ou 2, caractérisé en ce que les feuilles ou plaques empilées (12, 16, 18) sont transférées au four de chauffage (28) par au moins une bande transporteuse (30) en matière à propriétés antiadhérentes. Procédé selon la revendication 3, caractérisé en ce que les feuilles ou plaques empilées (12, 16, 18) amenées au four de chauffage (28) sont maintenues entre les bandes transporteuses (30) pendant le chauffage.

5/Procédé selon l'une des revendications 1 à 4, caractérisé en ce que des inserts (14) de renforcement et/ou de fixation sont implantés dans la ou les plaques ou feuilles (12) de matière thermoplastique formant l'âme lors de la constitution du panneau.

6/Procédé selon l'une des revendications précédentes, caractérisé en ce l'âme du panneau est en matière thermoplastique, notamment sous une forme alvéolaire, choisie dans le groupe: polyéthylène, polypropylène, polyuréthane souple ou semirigide, chlorure de polyvinyle, caoutchouc mousse de synthèse.

7/Procédé selon l'une des revendications précédentes, caractérisé en ce que les matières de revêtement ou de peau comprennent des feutres, des nappes de fibre non tissées, par exemple fibre de roche, des tissus, des feuilles en matière plastique thermoformable, et/ou des feuilles de thermoplastique renforcé estampable.

8/Installation de fabrication d'un panneau composite comprenant au moins une âme en matière thermoplastique et un revêtement (ou peau) en matière thermoplastique différente de celle de l'âme, caractérisée en ce qu'elle comporte un poste de chauffage (28) comprenant deux plaques chauffantes (48, 50) sensiblement parallèles, chaque plaque chauffante (48,50) comprenant une plaque métallique, par exemple d'aluminium, sur une face de laquelle sont disposées des résistances électriques de chauffage convenablement associées à une régulation de température, des moyens (52) de déplacement relatif et de serrage contrôlé à pression modérée de ces deux plaques l'une sur l'autre, et des moyens (30) de transfert pour amener entre les plaques chauffantes un empilage de plaques ou feuilles (12, 16, 18) de matière thermoplastique formant l'âme et le revêtement (ou la peau) du panneau composite.

9/Installation selon la revendication 8, caractérisée en ce que les résistances électriques sont agencées sur la plaque de chauffage en modules consécutifs à régulation indépendante.

10/ Installation selon l'une des revendications 8 et 9, caractérisée en ce que les moyens (30) de transfert comprennent au moins une bande transporteuse, par exemple en tissu enduit d'une matière à propriétés antiadhérentes, sur laquelle les plaques ou feuilles empilées (12,16,18) du panneau sont maintenues pendant le chauffage.

11/ L'installation selon l'une des revendications 8 à 10, caractérisée en ce que le poste de chauffage (28) est suivi d'un poste de thermocompression (20) comprenant une presse dont les plateaux parallèles sont équipés de matrices, de préférence refroidies, ou de plaques de formage avec découpage optionnel, et des moyens pour transférer le panneau composite (10) entre les plateaux de la presse et pour l'en sortir après formage.

12/ Installation selon la revendication 11, caractérisée en ce que le poste de thermocompression (20) est disposé entre deux postes de chauffage (28) et est alimenté en alternance par ces deux postes (28).

13/ Installation selon l'une des revendications 8 à 12, caractérisée en ce qu'elle comprend, en amont du ou de chaque poste de chauffage (28), un poste (22) d'approvisionnement en plaques et/ou feuilles de matière thermoplastique formant l'âme et le revêtement, un poste (24) de découpe de ces plaques et/ou feuilles aux formats voulus, et un poste (26) de préparation du panneau (10) par empilage les unes sur les autres des diverses plaques et/ou feuilles découpées destinées à former le panneau composite.

14/ Installation selon l'une des revendications 11 à 13, caractérisée en ce qu'elle comprend, en aval du poste de thermocompression, un poste (34) d'usinage et éventuellement de montage d'accessoires, et des postes (42,44) de rangement et d'emballage.

15/ Panneau de matériau composite, caractérisé en ce qu'il est obtenu par exécution du procédé selon l'une des revendications 1 à 7 ou par mise en oeuvre de l'installation selon l'une des revendications 8 à 14.

## FIG.1

10 →

18
16
14 14 12
12
16
18

## FIG.3

20

28

30

22 24 26 28 32 32 26 24 22

EP 0 322 316 A2

FIG.2

FIG.4

EP 0 322 316 A2